# EUROPÄISCHE PATENTSCHRIFT

(11) **EP 1 043 821 B1**
(45) Veröffentlichungstag und Bekanntmachung des Hinweises auf die Patenterteilung: **29.09.2004**
(21) Anmeldenummer: 00810160.2
(22) Anmeldetag: 25.02.2000
(51) Int. Cl.: H02B 1/32

(54) **Schaltschrank mit Rahmenschenkeln und Scharnier**
Switch cabinet with frame members and hinge
Armoire électrique avec montants et charnière

(30) Priorität: 09.04.1999 CH 67499
(43) Veröffentlichungstag der Anmeldung: 11.10.2000
(73) Patentinhaber: Weber AG, 6021 Emmenbrücke (CH)
(72) Erfinder: Schmitt, Oliver, 6030 Ebikon (CH)
(74) Vertreter: Isler & Pedrazzini AG

(56) Entgegenhaltungen:
- EP-A- 0 173 985
- EP-A- 0 866 531
- WO-A-98/23007
- CH-A- 285 914
- DE-C- 19 530 017
- DE-U- 29 808 253
- FR-A- 2 712 434

## Beschreibung

### TECHNISCHES GEBIET

Die vorliegende Erfindung bezieht sich auf das Gebiet der Schaltschränke. Sie betrifft einen Schaltschrank zur Aufnahme von elektrischen und/oder elektronischen Funktionseinheiten, welcher Schaltschrank ein aus einzelnen gleichartigen vertikalen und horizontalen Rahmenschenkeln zusammengesetztes, einen quaderförmigen Innenraum umschliessendes Rahmengestell umfasst, wobei in dem Innenraum zwischen den zu einer Längsseite oder einer Querseite gehörenden vertikalen Rahmenschenkeln Schienen, insbesondere DIN-Schienen, zur Befestigung von elektrischen und/oder elektronischen Funktionseinheiten befestigbar sind.

Ein solcher Schaltschrank ist z.B. aus den Druckschriften DE-C1-33 44 598 oder DE-A1-43 40 934 bekannt.

Die Erfindung betrifft weiterhin einen Rahmenschenkel sowie ein Scharnier für einen solchen Schaltschrank.

### STAND DER TECHNIK

Es ist seit längerem bekannt, Schaltschränke, in welehen auf normierte Art und Weise elektrische und/oder elektronische Funktionseinheiten wie z.B. Leistungsschalter, Relais, Sicherheitsschutzschalter, Steuerungen oder dgl. untergebracht und miteinander verdrahtet werden sollen, derart aufzubauen, dass zunächst ein rechteckiges Rahmengestell aus vorgefertigten einzelnen Rahmenschenkeln geeigneter Länge aufgebaut wird. Die Rahmenschenkel werden dabei an den Eckpunkten des Rahmengestells entweder direkt miteinander verbunden (siehe z.B. die DE-C1-33 44 598) oder mittels speziell ausgebildeter Eckstücke zusammengefügt (siehe z.B. die DE-C1-44 39 607 oder die DE-A1-44 39 624). In dem Rahmengestell können dann innen zwischen den vertikalen Rahmenschenkeln Montageschienen, insbesondere genormte DIN-Schienen, angeschraubt werden, an welchen dann die Funktionseinheiten angebracht, z.B. aufgeschnappt, werden können. Der Schaltschrank wird dadurch komplettiert, dass die offenen Seiten des Rahmengestells mit Seitenwänden und ggf. einer verschwenkbar angebrachten Tür abgedeckt werden, die am Rahmengestell befestigt sind.

Die Befestigungsmöglichkeiten innerhalb des Rahmengestells können unterschiedlich ausgebildet sein. So ist es bekannt (DE-A1-43 36 204) die Rahmenschenkel ohne eigene Befestigungsmittel auszubilden und für die Befestigung separate Modulschienen vorzusehen, die mit in einem Raster angeordneten (abwechselnd runden und rechteckigen) Montagelöchern versehen sind und mit den Rahmenschenkeln verbunden werden. Es ist aber auch aus den beiden eingangs genannten Druckschriften (DE-A1-43 40 934 und DE-C1-33 44 598) bekannt, die Rahmenschenkel selbst mit in einem Raster angeordneten Montagelöchern auszustatten. Die erstgenannte Lösung ist von der Herstellung und Lagerhaltung vergleichsweise aufwendig, weil für das komplette Rahmengestell verschiedenartige Hohlprofile benötigt werden. Die letztgenannte Lösung ist zwar einfacher, hat jedoch einen wesentlichen Nachteil: Werden nämlich zwischen zwei Rahmenschenkeln Montageschienen für die Funktionseinheiten befestigt, bilden sich zwischen den Enden der Montageschienen und den Rahmenschenkeln, an denen sie angeschraubt sind, Absätze. Diese Absätze sind beim Gebrauch des Schaltschrankes jedoch störend, wenn beispielsweise ein kastenförmiger Einsatz in den Schaltschrank eingeschoben werden soll. Wünschenswert ist vielmehr für den Innenraum des Schrankes eine durchgehende lichte Weite, die auch durch den Einbau von Montageschienen nicht verändert wird.

### DARSTELLUNG DER ERFINDUNG

Es ist daher Aufgabe der Erfindung, einen Schaltschrank der eingangs genannten Art so auszubilden, dass die Nachteile bekannter Schränke vermieden werden, und dass sich insbesondere bei gleichzeitig einfachem Aufbau des Rahmengestells Montageschienen, insbesondere DIN-Schienen im Rahmengestell befestigen lassen, ohne dass die lichte Weite im Innenraum des Schrankes verändert wird, sowie einen Rahmenschenkel und ein Scharnier für einen solchen Schaltschrank anzugeben.

Die Aufgabe wird durch die Gesamtheit der Merkmale des Anspruchs 1 gelöst. Der Kern der Erfindung besteht darin, für die Rahmenschenkel ein Querschnittsprofil zu wählen, welches an die einzubauenden Montageschienen derart angepasst ist, dass sich ein bündiger Anschluss zwischen dem jeweiligen Rahmenschenkel und der daran befestigten Montageschiene ergibt. Insbesondere ist ein Querschnittsprofil möglich, mit dem sich ein bündiger Anschluss für wenigstens zwei unterschiedlich tiefe Montageschienen erreichen lässt. Da als Montageschienen üblicherweise DIN-Schienen mit genormten Tiefen verwendet werden, kann das Querschnittsprofil für die meisten Anwendungsfälle einheitlich festgelegt werden.

Eine erste bevorzugte Ausführungsform der Erfindung ist dadurch gekennzeichnet, dass die Rahmenschenkel ein zu einer Mittelebene spiegelsymmetrisches, T-förmiges Querschnittsprofil aufweisen, dass die Breite des T-förmigen Querschnittsprofils das 3-fache der Breite des Fusses des T-förmigen Querschnittsprofils beträgt, dass die Breite des Fusses der Tiefe einer ersten DIN-Schiene entspricht, und dass die Höhe des Fusses des T-förmigen Querschnittsprofils der Tiefe einer zweiten DIN-Schiene entspricht. Das T-förmige Querschnittsprofil für zu einem sehr stabilen und verwindungssteifen Rahmengestell. Durch die spezielle Wahl der Abmessungen lassen sich je nach Orientierung zwei unterschiedlich tiefe DIN-Schienen mit bündigem Anschluss an den Rahmenschenkeln befestigen. Bevorzugt beträgt dabei die Breite des Fusses des T-förmigen Querschnittsprofils 15 mm (für DIN-Schienen mit 15 mm Tiefe) und die Höhe des Fusses 20 mm (für DIN-Schienen mit einer Tiefe von 20 mm).

Eine zweite bevorzugte Ausführungsform zeichnet sich dadurch aus, dass die Rahmenschenkel als aus einem Blech durch Biegen geformte und durch Verschweissen geschlossene Hohlprofile ausgebildet sind, und dass die Rahmenschenkel eine Vielzahl von in Schenkellängsrichtung in einem Rastermass (von z.B. 25 mm bzw. 12,5 mm) angeordneten Montageöffnungen aufweisen. Das geschlossene Hohlprofil hat bei gleichzeitig geringem Gewicht eine hohe mechanische Stabilität. Darüber hinaus lassen sich vor dem Biegen und Verschweissen durch einfache Stanzvorgänge die gewünschten Montageöffnungen in das Blech einbringen. Als Blech kommt vorzugsweise ein verzinktes Stahlblech in Betracht.

Um alternativ bei der Befestigung der Montageschienen mit Blechschrauben oder mit Käfigmuttern arbeiten zu können, ist gemäss einer Weiterbildung der Ausführungsform vorgesehen, dass in beiden Seitenflächen des Fusses des T-förmigen Querschnittsprofils als Montageöffnungen alternierend rechteckige Ausschnitte für die Aufnahme von Käfigmuttern und runde Löcher für das Eindrehen von Blechschrauben angeordnet sind.

Vorzugsweise ist zum Verbinden der Rahmenschenkel in einem der Eckpunkte des Rahmens jeweils ein Eckstück vorgesehen, an welchem die sich im Eckpunkt treffenden Rahmenschenkel mit ihren Enden befestigt werden. Wenn die Rahmenschenkel gemäss der oben beschriebenen Ausführungsform als Hohlprofile mit T-förmigem Querschnittsprofil ausgebildet sind, weist das Eckstück drei in orthogonale Raumrichtungen abstehende Schenkel mit einem T-förmigen Querschnittsprofil auf, auf welche die Rahmenschenkel mit ihren Enden aufsteckbar sind. Hierdurch lässt sich eine einfache und sichere Montage des Rahmengestells erreichen. Die Befestigung erfolgt bei den Rahmenschenkeln, die mit in Schenkellängsrichtung in einem Rastermass angeordneten Montageöffnungen augestattet sind, so, dass die Rahmenschenkel unter Zuhilfenahme dieser Montageöffnungen am Eckstück nach dem Aufstecken befestigt (z.B. angeschraubt oder angenietet) werden.

Eine andere bevorzugte Ausführungsform des Schaltschrankes nach der Erfindung ist dadurch gekennzeichnet, dass der Schaltschrank eine Tür aufweist, welche mittels Scharnieren an einem der Rahmenschenkel verschwenkbar befestigt ist, dass die Scharniere jeweils einen an dem Rahmenschenkel befestigten schrankseitigen Scharnierbügel und einen an der Tür befestigten türseitigen Schamierbügel umfassen, dass beide Schamierbügel jeweils wenigstens eine Rolle mit einem entsprechenden Achsloch zum Durchstecken eines Scharnierbolzens aufweisen, und dass an den Rollen Mittel vorgesehen sind, mittels derer die Tür mit ihren Scharnierbügeln ohne Einsatz der zugehörigen Scharnierbolzen in die schrankseitigen Scharnierbügel zentrierend eingehängt und provisorisch fixiert werden kann. Hierdurch wird die Montage des mit einer Tür ausgestatteten Schaltschrankes weiter erleichtert.

Der erfindungsgemässe Rahmenschenkel ist dadurch gekennzeichnet, dass er ein zu einer Mittelebene spiegelsymmetrisches, T-förmiges Querschnittsprofil aufweist, dass die Breite des T-förmigen Querschnittsprofils das 3-fache der Breite des Fusses des T-förmigen Querschnittsprofils beträgt, dass die Breite des Fusses der Tiefe einer ersten DIN-Schiene entspricht, und dass die Höhe des Fusses des T-förmigen Querschnittsprofils der Tiefe einer zweiten DIN-Schiene entspricht.

Bevorzugt wird eine Ausführungsform des Rahmenschenkels, bei welcher der Rahmenschenkel als aus einem Blech durch Biegen geformte und durch Verschweissen geschlossenes Hohlprofil ausgebildet ist, und dass der Rahmenschenkel eine Vielzahl von in Schenkellängsrichtung in einem Rastermass angeordneten Montageöffnungen aufweist, wobei in beiden Seitenflächen des Fusses des T-förmigen Querschnittsprofils als Montageöffnungen alternierend rechteckige Ausschnitte für die Aufnahme von Käfigmuttern und runde Löcher für das Eindrehen von Blechschrauben angeordnet sind, und wobei auf der Unterseite und in den Seitenflächen des Querbalkens des T-förmigen Querschnittsprofils als Montageöffnungen runde Löcher angeordnet sind.

Das erfindungsgemässe Scharnier ist dadurch gekennzeichnet, dass das Scharnier jeweils einen schrankseitigen Scharnierbügel und einen türseitigen Scharnierbügel umfasst, dass beide Scharnierbügel jeweils wenigstens eine Rolle mit einem entsprechenden Achsloch zum Durchstecken eines Schamierbolzens aufweisen, und dass an den Rollen vorgesehen sind, mittels derer die Tür mit ihren Scharnierbügeln ohne Einsatz der zugehörigen Schamierbolzen in die schrankseitigen Scharnierbügel zentrierend eingehängt und provisorisch fixiert werden kann.

Eine bevorzugte Ausführungsform des erfindungsgemässen Scharniers zeichnet sich dadurch aus, dass die Zentrierungs- bzw. Fixierungsmittel korrespondierende konische Zentrierflächen an den einander zugeordneten Enden der Rollen der Scharnierbügel umfassen.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in der Draufsicht von oben ein Rahmengestell aus Rahmenschenkeln mit T-förmigem Querschnittsprofil und beispielhaft montierten DIN-Schienen gemäss einem bevorzugten Ausführungsbeispiel der Erfindung;
- Fig. 2: das Quefschnittsprofil der Rahmenschenkel aus Fig. 1;
- Fig. 3: in perspektivischer Seitenansicht einen Rahmenschenkel aus Fig. 1;
- Fig. 4: eine zu Fig. 3 analoge Darstellung, wobei der Rahmenschenkel um seine Längsachse um 180° gedreht ist;
- Fig. 5: ein Eckstück gemäss einem bevorzugten Ausführungsbeispiel der Erfindung zur Verbindung der in einer Ecke des Rahmengestells zusammenstossenden Rahmenschenkel;
- Fig. 6: in einem Ausschnitt die bevorzugte schwenkbare Lagerung einer Tür an dem Rahmengestell nach Fig. 1 mittels Scharnieren; und
- Fig. 7: die Ausbildung eines Scharniers gemäss Fig. 6 in einer Explosionsdarstellung.

### WEGE ZUR AUSFÜHRUNG DER ERFINDUNG

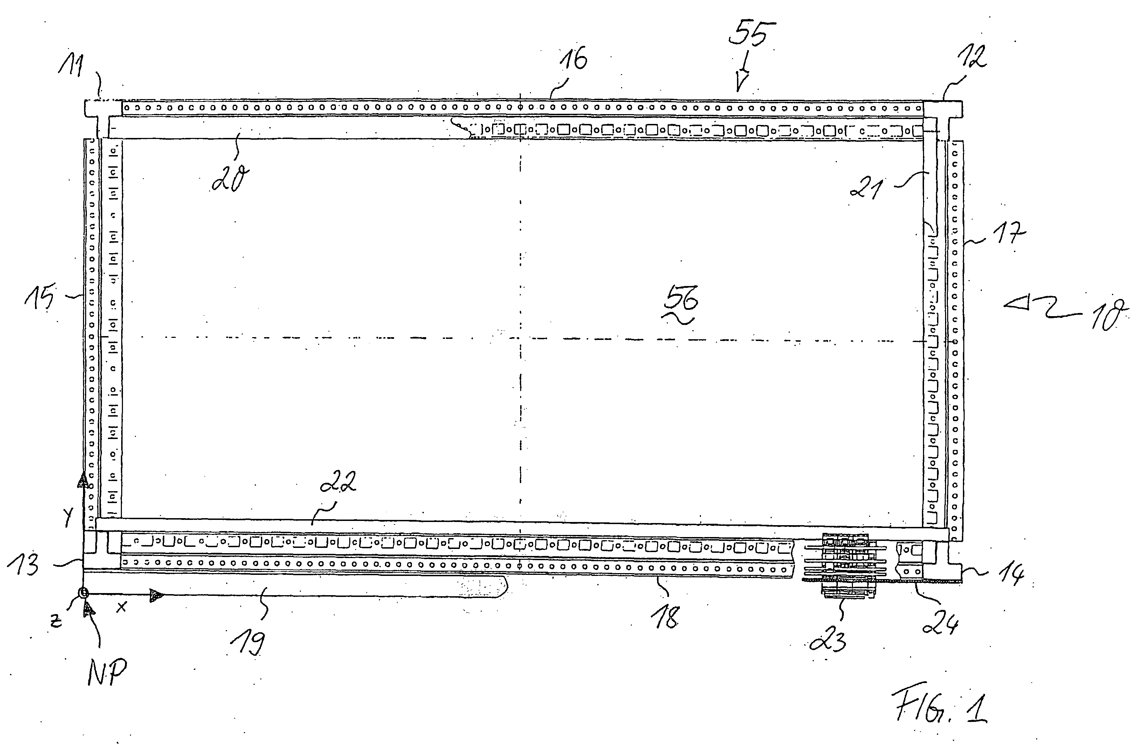

Der Schaltschrank nach der Erfindung basiert wesentlich auf einem (rechteckigen) Rahmengestell aus Rahmenschenkeln mit einem vorgegebenen Querschnittsprofil. Ein bevorzugtes Ausführungsbeispiel eines solchen Rahmengestells ist in Fig. 1 in der Draufsicht von oben wiedergegeben. Das Rahmengestell 55 des Schaltschrankes 10 setzt sich zusammen aus vier vertikalen Rahmenschenkeln 11,.., 14 (bzw. 25 in Fig. 2 bis 4), die jeweils ein T-förmiges Querschnittsprofil gemäss Fig. 2 aufweisen, welches symmetrisch zu einer Mittelebene M ist und einen Fuss 57 (des T) sowie einen Querbalken 58 (des T) umfasst. Die vertikalen Rahmenschenkel 11,.., 14 sind so orientiert, dass die Füsse 57 des T-förmigen Querschnittsprofils nach innen zeigen, und die Füsse 57 der vorderen Rahmenschenkel 13, 14 denen der hinteren Rahmenschenkel 11, 12 direkt gegenüberliegen. Zwischen den vertikalen Rahmenschenkeln 11,..,14 sind am unteren und oberen Ende jeweils in einem Rechteck horizontale Rahmenschenkel angeordnet, von denen in Fig. 1 nur die unteren Rahmenschenkel 15,..,18 dargestellt sind.

Die horizontalen Rahmenschenkel 15,..,18 sind in Querschnittsprofil und sonstiger Ausgestaltung identisch mit den vertikalen Rahmenschenkeln 11,..,14. Insbesondere sind alle Rahmenschenkel 11,..,18 bzw. 25 gemäss Fig. 3 und 4 mit in Längsrichtung in einem vorgegebenen Rastermass (12,5 bzw. 25 mm) angeordneten rechteckigen Ausschnitten 26 für die Aufnahme von Käfigmuttern, sowie runden Löchern 27,..,29 für das Einschrauben von Blechschrauben oder dgl. ausgestattet. Eine alternierende Abfolge von rechteckigen Ausschnitten 26 und runden Löchern 27 ist dabei auf beiden Längsseiten des Fusses 57 des T-förmigen Querschnittsprofils vorgesehen. Die Rahmenschenkel 11,..,18 sind als geschlossene Hohlprofile ausgebildet. Sie werden bevorzugt durch (zur Mittelebene symmetrisches) Biegen aus einem Blechzuschnitt hergestellt und Längs einer Schweissnaht 54 (Fig. 2) verschweisst. Als Material wird dabei vorzugsweise eine feuerverzinktes Stahlblech verwendet. Es ist aber durchaus auch denkbar, im Rahmen der Erfindung anstelle des gebogenen und verschweissten Blechprofils beispielsweise ein Strangprofil aus Aluminium zu verwenden.

Die Abmessungen des Querschnittsprofils gemäss Fig. 2 sind vorzugsweise so gewählt, dass die Breite b4 des Querbalkens 58 der dreifachen Breite b2 des Fusses 57 entspricht. Aufgrund der Symmetrie folgt daraus gleichzeitig, dass der Querbalken 58 seitlich jeweils um eine Breite b1 bzw. b3 über den Fuss 57 übersteht, die gleich der Breite b2 des Fusses 57 selbst ist. Die Höhe h des Fusses 57 weicht von der Breite b2 ab und wird vorzugsweise grösser gewählt. Insbesondere werden die Breite b2 und die Höhe h so gewählt, dass sie jeweils der Tiefe einer DIN-Schiene (20,..,22 in Fig. 1) entsprechen. Vorzugsweise ist dies der Fall, wenn b2 = 15 mm und h = 20 mm festgelegt werden. Wird dann - wie in Fig. 1 gezeigt - eine DIN-Schiene 20 mit 20 mm Tiefe zwischen den vertikalen Rahmenschenkeln 11 und 12 befestigt, schliesst die DIN-Schiene 20 mit ihrer zum Innenraum 56 des Schaltschrankes 10 gerichteten Fläche bündig an die Unterseite des Fusses 57 der Rahmenschenkel 11, 12 und 16 an. Hierdurch werden störende Absätze zwischen den DIN-Schienen und den Rahmenschenkeln vermieden. Dasselbe gilt, wenn DIN-Schienen 21 mit der Tiefe 15 mm zwischen einem hinteren Rahmenschenkel 12 und einem vorderen Rahmenschenkel 14 befestigt werden. In diesem Fall schliesst die dem Innenraum 56 zugewandte Fläche der DIN-Schiene 21 bündig an die nach innen orientierte Seitenfläche des Querbalkens 58 der Rahmenschenkel 12 und 14 an.

Soll nun beispielsweise ein Leistungsschutzschalter (23 in Fig. 1) von aussen bedienbar im Schaltschrank 10 untergebracht werden, wird gemäss Fig. 1 eine DIN-Schiene 22 von innen gegen die Füsse der vorderen Rahmenschenkel 13, 14 geschraubt. Der Leistungsschutzschalter 23 kann dann auf die DIN-Schiene 22 von vorne aufgeschnappt werden und ragt mit seinen Bedienteil über die Frontseite des Schaltschrankes 10 hinaus. Die Frontseite kann zumindest bereichsweise mit einer Abdeckplatte 24, die im Bereich des Leistungsschutzschalters 23 einen entsprechenden Ausschnitt aufweist, abgedeckt werden.

Alternativ zu der Abdeckplatte 24 im selben Bereich oder zusätzlich zu der Abdeckplatte 24 in einem anderen Bereich der Frontfläche kann die Frontseite mit einer schwenkbar am Rahmengestell 55 gelagerten Tür 19 abgedeckt werden. Die Gesamthöhe (Fuss 57 plus Querbalken 58) der Rahmenschenkel 25 und die Längen der Rahmenschenkel 11,..,18 werden nun so gewählt, dass die Schrankaussenmasse in einem 25 mm-Raster in allen drei orthogonalen Achsen x, y und z beliebig erweiterbar sind. Der Nullpunkt NP des Rasters befindet sich dabei - wie in Fig. 1 dargestellt - an der einen (linken) Schrankseite (ohne Seitenwand) in der Frontebene der Tür 19 und am Boden bzw. Sockel des Schaltschrankes 10.

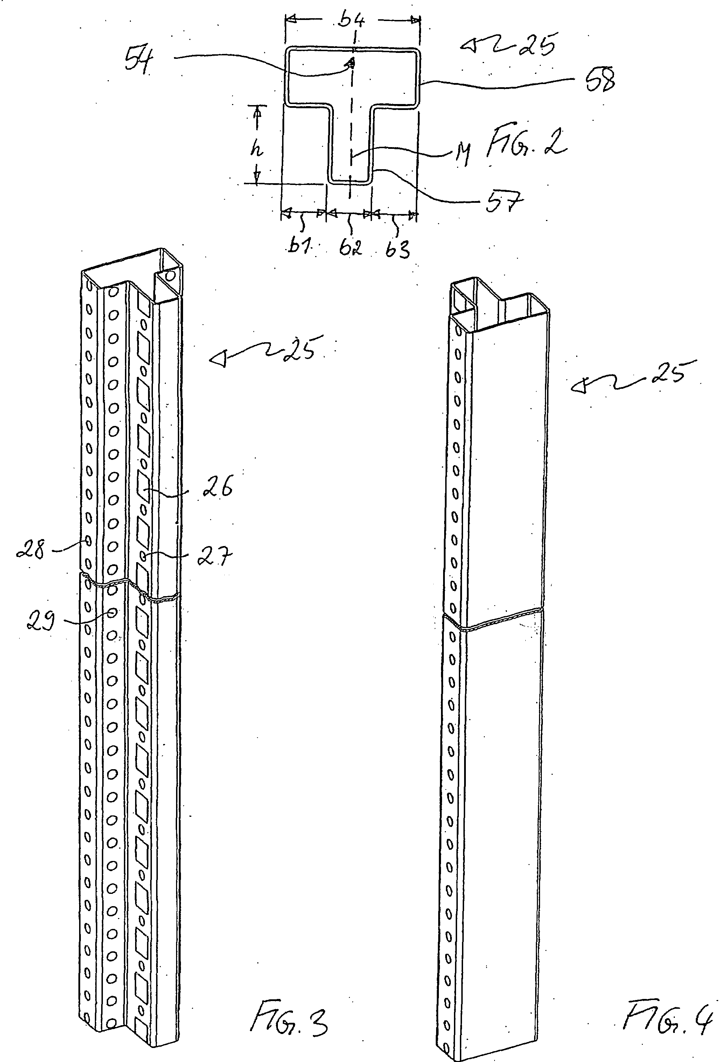

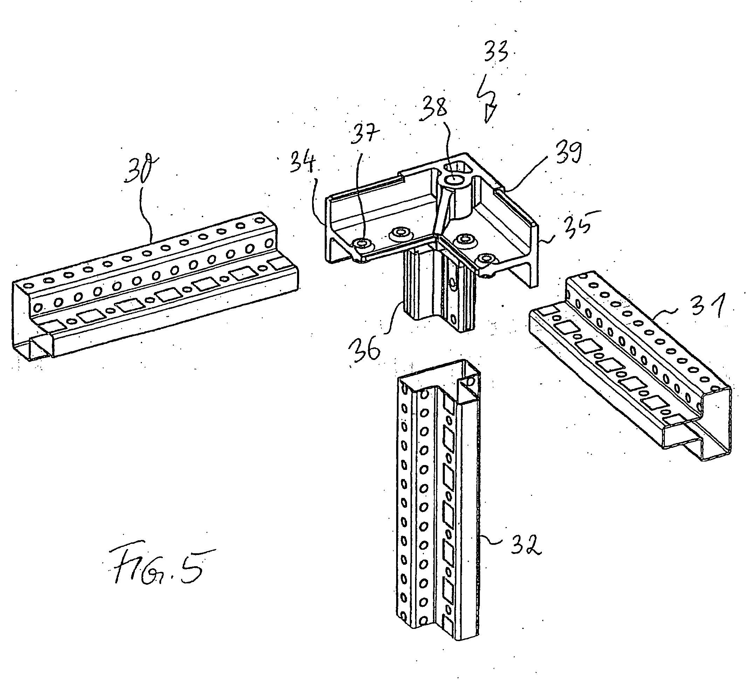

In Fig. 1 sind aus Gründen der Einfachheit nur die Rahmenschenkel 11,..,18 des Rahmengestells 55 als solche, nicht jedoch die Verbindung der Rahmenschenkel in den Eckpunkten des Rahmengestells, dargestellt. Eine solche Eckverbindung wird gemäss Fig. 5 vorzugsweise mit Hilfe eines entsprechend ausgebildeten Eckstückes 33 hergestellt. Das Eckstück 33 ist dabei beispielsweise ein einstückiges Leichtmetall-Gussteil. Das Eckstück 33 hat drei in orthogonale Raumrichtungen abstehende Schenkel 34, 35, 36 mit einem T-förmigen Querschnittsprofil, auf welche die an der Ecke zusammenstossenden Rahmenschenkel 30, 31, 32 mit ihren Enden aufsteckbar sind. Das Profil der abstehenden Schenkel 34,..,36 ist dabei in seinen Abmessungen auf das Hohlprofil der Rahmenschenkel 30,..,32 abgestimmt. Zur eigentlichen Befestigung sind in den Schenkeln 34,..,36 Befestigungslöcher 37 vorgesehen, die bei aufgesteckten Rahmenschenkeln 30,..,32 mit den Löchern 27 in den Rahmenschenkeln korrespondieren. Die Befestigung kann durch Verschrauben erfolgen, wird aber vorzugsweise durch Nieten bewirkt. Im Eckstück kann mit Vorteil auch ein Gewindeloch 38 zum Einschrauben einer Ringschraube angeordnet sein, mit deren Hilfe der Schaltschrank 10 angehoben wehrden kann.

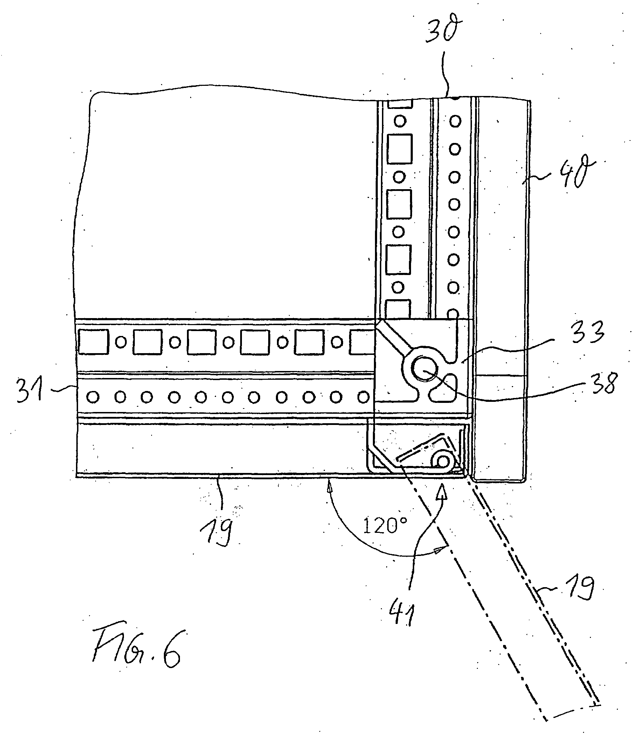

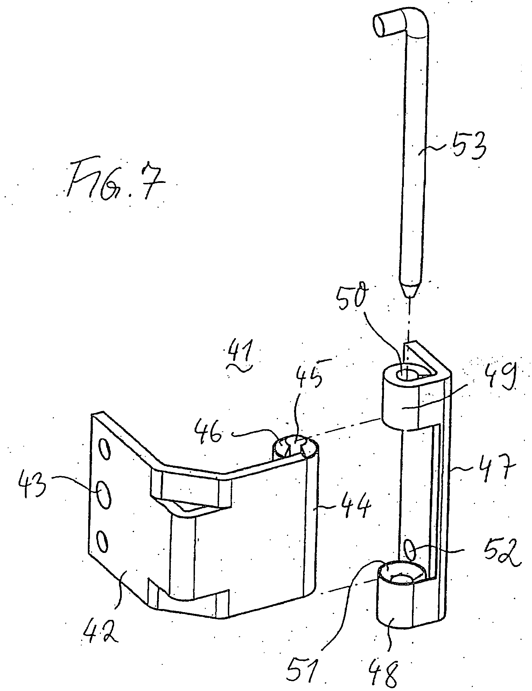

Die schwenkbare Lagerung der Tür 19 erfolgt gemäss Fig. 6 über Scharniere 41, die an einem der vertikalen Rahmenschenkel angeschraubt werden. Ein solches Scharnier 41 besteht gemäss Fig. 7 vorzugsweise aus einem schrankseitigen Scharnierbügel 42 und einem türseitigen Schamierbügel 47. Beide Scharnierbügel 42 und 47 sind aus einem Blechzuschnitt durch entsprechendes Biegen hergestellt. Für die schwenkbare Verbindung der beiden Scharnierbügel 42, 47 sind an beiden Bügeln Rollen 44 bzw. 48, 49 ausgebildet, die jeweils ein in der Schwenkachse befindliches Achsloch 45 bzw. 50 umschliessen. Die Befestigung der Scharnierbügel 42, 47 am Rahmengestell 55 bzw. an der Tür 19 erfolgt mittels Befestigungslöchern 43 bzw. 52. Zur Montage des Scharniers 41 werden beide Scharnierbügel 42, 47 so zusammengebracht, dass die Achslöcher 45 und 50 miteinander fluchten. Anschliessend wird durch die Achslöcher 50 und 45 von oben ein Scharnierbolzen 53 gesteckt, der durch ein hakenförmig abgebogenes oberes Ende gegen ein Herausfallen nach unten gesichert ist.

Die Besonderheit des Scharniers 41 besteht darin, dass an den Rollen 44 bzw. 48, 49 Mittel vorgesehen sind, mittels derer die Tür 19 mit ihren Schamierbügeln 47 ohne Einsatz der zugehörigen Scharnierbolzen 53 in die schrankseitigen Scharnierbügel 42 zentrierend eingehängt und provisorisch fixiert werden kann. Diese Zentrierungs- bzw. Fixierungsmittel umfassen korrespondierende konische Zentrierflächen 46 bzw. 51 an den einander zugeordneten Enden der Rollen 44 und 48, 49 der Schamierbügel 47 bzw. 48, 49. Wird die Tür 19 mit dem Scharnierbügel 47 auf den schrankseitigen Scharnierbügel 42 aufgesetzt, gleitet die obere Rolle 49 des türseitigen Scharnierbügels 47 mit ihrer konischen Zentrierfläche, die der Zentrierfläche 51 der unteren Rolle 48 gegenüberliegt, in Fig. 7 aber verdeckt ist, einrastend über die konische Zentrierfläche 46 der Rolle 44, bis beide Flächen zentriert übereinanderliegen. Ein Abgleiten der Rolle 49 von der Rolle 44 kann dann nur durch eine Anheben der Tür 19 erreicht werden.

### BEZUGSZEICHENLISTE

- 10: Schaltschrank
- 11,..,14: Rahmenschenkel (vertikal)
- 15,..,18: Rahmenschenkel (horizontal)
- 19: Tür
- 20,21,22: DIN-Schiene
- 23: Leistungsschutzschalter
- 24: Abdeckplatte
- 25: Rahmenschenkel (allgemein)
- 26: Ausschnitt (rechteckig f. Käfigmutter)
- 27,..,29: Loch (z.B. für Blechschraube)
- 30,31,32: Rahmenschenkel
- 33: Eckstück
- 34,35,36: Schenkel (T-förmig)
- 37: Befestigungsloch
- 38: Gewindeloch
- 39: Absatz
- 40: Seitenwand
- 41: Scharnier
- 42: Scharnierbügel (schrankseitig)
- 43: Befestigungsloch
- 44: Rolle
- 45: Achsloch
- 46: Zentrierfläche (konisch)
- 47: Scharnierbügel (türseitig)
- 48,49: Rolle
- 50: Achsloch
- 51: Zentrierfläche (konisch)
- 52: Befestigungsloch
- 53: Scharnierbolzen
- 54: Schweissnaht
- 55: Rahmengestell
- 56: Innenraum
- 57: Fuss (des T-förmigen Querschnittsprofils)
- 58: Querbalken (des T-förmigen Querschnittsprofils)
- b1,..,b4: Breite (Querschnittsprofil)
- NP: Nullpunkt
- M: Mittelebene

## Patentansprüche

1. Schaltschrank (10) zur Aufnahme von elektrischen und/oder elektronischen Funktionseinheiten, welcher Schaltschrank (10) ein aus einzelnen gleichartigen vertikalen und horizontalen Rahmenschenkeln (11,..,14; 15,..,18; 25; 30,..,33) zusammengesetztes, einen quaderförmigen Innenraum (56) umschliessendens Rahmengestell (55) umfasst, wobei in dem Innenraum (56) zwischen den zu einer Längsseite oder einer Querseite gehörenden vertikalen Rahmenschenkeln (11,..,14) Schienen, insbesondere DIN-Schienen (20, 21, 22), zur Befestigung von elektrischen und/oder elektronischen Funktionseinheiten (23) befestigbar sind, **dadurch gekennzeichnet, dass** alle Rahmenschenkel (11,..,14; 15,..,18; 25; 30,..,33) ein rechteckiges Querschnittsprofil aufweisen, welches an die Tiefe der Schienen bzw. DIN-Schienen (20, 21, 22) derart angepasst ist, dass bei einer Montage der Schienen (20, 21, 22) an den Rahmenschenkeln (11,..,14) die dem Innenraum (56) des Schaltschrankes (10) zugewandten Seiten der Schienen (20, 21, 22) an die Rahmenschenkel (11,..,14) bündig anschliessen.

2. Schaltschrank nach Anspruch 1, **dadurch gekennzeichnet, dass** die Rahmenschenkel (11,..,14; 15,..,18; 25; 30,..,33) ein zu einer Mittelebene (M) spiegelsymmetrisches, T-förmiges Querschnittsprofil aufweisen.

3. Schaltschrank nach Anspruch 2, **dadurch gekennzeichnet, dass** die Breite (b4) des T-förmigen Querschnittsprofils das 3-fache der Breite (b2) des Fusses (57) des T-förmigen Querschnittsprofils beträgt, und dass die Breite (b2) des Fusses (57) der Tiefe einer ersten DIN-Schiene (21) entspricht.

4. Schaltschrank nach Anspruch 2 oder 3, **dadurch gekennzeichnet, dass** die Höhe (h) des Fusses (57) des T-förmigen Querschnittsprofils der Tiefe einer zweiten DIN-Schiene (20) entspricht.

5. Schaltschrank nach Anspruch 4, **dadurch gekennzeichnet, dass** die Breite (b2) des Fusses (57) des T-förmigen Querschnittsprofils 15 mm und die Höhe (h) des Fusse (57) 20 mm beträgt.

6. Schaltschrank nach einem der Ansprüche 2 bis 5, **dadurch gekennzeichnet, dass** die Rahmenschenkel (11,..,14; 15,..,18; 25; 30,..,33) als aus einem Blech durch Biegen geformte und durch Verschweissen geschlossene Hohlprofile ausgebildet sind.

7. Schaltschrank nach Anspruch 6, **dadurch gekennzeichnet, dass** die Rahmenschenkel (11,..,14; 15,..,18; 25; 30,..,33) eine Vielzahl von in Schenkellängsrichtung in einem Rastermass angeordneten Montageöffnungen (26,..,28) aufweisen.

8. Schaltschrank nach Anspruch 7, **dadurch gekennzeichnet, dass** in beiden Seitenflächen des Fusses (57) des T-förmigen Querschnittsprofils als Montageöffnungen alternierend rechteckige Ausschnitte (26) für die Aufnahme von Käfigmuttern und runde Löcher (27) für das Eindrehen von Blechschrauben angeordnet sind.

9. Schaltschrank nach Anspruch 8, **dadurch gekennzeichnet, dass** auf der Unterseite und in den Seitenflächen des Querbalkens (58) des T-förmigen Querschnittsprofils als Montageöffnungen runde Löcher (28, 29) angeordnet sind.

10. Schaltschrank nach einem der Ansprüche 1 bis 9, **dadurch gekennzeichnet, dass** zum Verbinden der Rahmenschenkel (11,..,14; 15,..,18; 25; 30,..,33) in einem der Eckpunkte des Rahmens (55) jeweils ein Eckstück (33) vorgesehen ist, an welchem die sich im Eckpunkt treffenden Rahmenschenkel (30, 31, 32) mit ihren Enden befestigt werden.

11. Schaltschrank nach Anspruch 10, **dadurch gekennzeichnet, dass** die Rahmenschenkel (11,.., 14; 15,.., 18; 25; 30,..,33) als Hohlprofile mit T-förmigem Querschnittsprofil ausgebildet sind, und dass das Eckstück drei in orthogonale Raurnrichtungen abstehende Schenkel (34, 35, 36) mit einem T-förmigen Querschnittsprofil aufweist, auf welche die Rahmenschenkel (30, 31, 32) mit ihren Einden aufsteckbar sind.

12. Schaltschrank nach Anspruch 11, **dadurch gekennzeichnet, dass** die Rahmenschenkel (11,..,14; 15,..,18; 25; 30,..,33) mit in Schenkellängsrichtung in einem Rastermass angeordneten Montageöffnungen (26,..,29) ausgestattet sind, und dass die Rahmenschenkel (30, 31, 32) unter Zuhilfenahme dieser Montageöffnungen am Eckstück (33) nach dem Aufstecken befestigt werden.

13. Schaltschrank nach einem der Ansprüche 10 bis 12, **dadurch gekennzeichnet, dass** die Eckstücke (33) jeweils ein Gewindeloch (38) zum Einschrauben einer Ringschraube aufweisen.

14. Schaltschrank nach einem der Ansprüche 1 bis 13, **dadurch gekennzeichnet, dass** der Schaltschrank (10) eine Tür (19) aufweist, welche mittels Scharnieren (41) an einem der Rahmenschenkel (11,..,14; 15,..,18; 25; 30,..,33) verschwenkbar befestigt ist.

15. Schaltschrank nach Anspruch 14, **dadurch gekennzeichnet, dass** die Scharniere (41) jeweils einen an dem Rahmenschenkel (11,..,14; 15,..,18; 25; 30,..,33) befestigten schrankseitigen Schamierbügel (42) und einen an der Tür (19) befestigten türseitigen Schamierbügel (47) umfassen, dass beide Scharnierbügel (42, 47) jeweils wenigstens eine Rolle (44 bzw. 48, 49) mit einem entsprechenden Achsloch (45 bzw. 50) zum Durchstecken eines Scharnierbolzens (53) aufweisen, und dass an den Rollen (44, 48, 49) Mittel (46, 51) vorgesehen sind, mittels derer die Tür (19) mit ihren Scharnierbügeln (47) ohne Einsatz der zugehörigen Schamierbolzen (53) in die schrankseitigen Schamierbügel (42) zentrierend eingehängt und provisorisch fixiert werden kann.

16. Schaltschrank nach Anspruch 15, **dadurch gekennzeichnet, dass** die Zentrierungs- bzw. Fixierungsmittel korrespondierende konische Zentrierflächen (46, 51) an den einander zugeordneten Enden der Rollen (44, 48, 49) der Scharnierbügel (47, 48, 49) umfassen.

17. Rahmenschenkel für einen Schaltschrank nach einem der Ansprüche 1 bis 16, **dadurch gekennzeichnet, dass** der Rahmenschenkel (11,..,14; 15,..,18; 25; 30,..,33) ein zu einer Mittelebene (M) spiegelsymmetrisches, T-förmiges Querschnittsprofil aufweist, dass die Breite (b4) des T-förmigen Querschnittsprofils das 3-fache der Breite (b2) des Fusses (57) des T-förmigen Querschnittsprofils beträgt, dass die Breite (b2) des Fusses (57) der Tiefe einer ersten DIN-Schiene (21) entspricht, und dass die Höhe (h) des Fusses (57) des T-förmigen Querschnittsprofils der Tiefe einer zweiten DIN-Schiene (20) entspricht.

18. Rahmenschenkel nach Anspruch 17, **dadurch gekennzeichnet, dass** die Breite (b2) des Fusses (57) des T-förmigen Querschnittsprofils 15 mm und die Höhe (h) des Fusse (57) 20 mm beträgt.

19. Rahmenschenkel nach einem der Ansprüche 17 und 18, **dadurch gekennzeichnet, dass** der Rahmenschenkel (11,.., 14; 15,.., 18; 25; 30,..,33) als aus einem Blech durch Biegen geformte und durch Verschweissen geschlossenes Hohlprofil ausgebildet ist, und dass der Rahmenschenkel (11,..,14; 15,..,18; 25; 30,..,33) eine Vielzahl von in Schenkellängsrichtung in einem Rastermass angeordneten Montageöffnungen (26,..,28) aufweist, wobei in beiden Seitenflächen des Fusses (57) des T-förmigen Querschnittsprofils als Montageöffnungen alternierend rechteckige Ausschnitte (26) für die Aufnahme von Käfigmuttern und runde Löcher (27) für das Eindrehen von Blechschrauben angeordnet sind, und wobei auf der Unterseite und in den Seitenflächen des Querbalkens (58) des T-förmigen Querschnittsprofils als Montageöffnungen runde Löcher (28, 29) angeordnet sind.

20. Scharnier für einen Schaltschrank nach einem der Ansprüche 1 bis 16; **dadurch gekennzeichnet, dass** das Scharnier (41) jeweils einen schrankseitigen Scharnierbügel (42) und einen türseitigen Schamierbügel (47) umfasst, dass beide Scharnierbügel (42, 47) jeweils wenigstens eine Rolle (44 bzw. 48, 49) mit einem entsprechenden Achsloch (45 bzw. 50) zum Durchstecken eines Scharnierbolzens (53) aufweisen, und dass an den Rollen (44, 48, 49) Mittel (46, 51) vorgesehen sind, mittels derer die Tür (19) mit ihren Scharnierbügeln (47) ohne Einsatz der zugehörigen Scharnierbolzen (53) in die schrankseitigen Scharnierbügel (42) zentrierend eingehängt und provisorisch fixiert werden kann.

21. Scharnier nach Anspruch 20, **dadurch gekennzeichnet, dass** die Zentrierungs- bzw. Fixierungsmittel korrespondierende konische Zentrierflächen (46, 51) an den einander zugeordneten Enden der Rollen (44, 48, 49) der Scharnierbügel (47, 48, 49) umfassen.

## Claims

1. Switch cabinet (10) for accommodating electrical and/or electronic functional units, which switch cabinet (10) comprises a framework (55) which is made up of individual identical vertical and horizontal frame legs (11, ..., 14; 15, ..., 18; 25; 30, ..., 33) and encloses a cuboidal interior (56), it being possible for rails, in particular DIN rails (20, 21, 22), for fastening electrical and/or electronic functional units (23) to be fastened in the interior (56) between the vertical frame legs (11, ..., 14) belonging to a longitudinal side or a transverse side, **characterized in that** all the frame legs (11, ..., 14; 15, ..., 18; 25; 30, ..., 33) have a rectangular cross-sectional profile which is adapted to the depth of the rails or DIN rails (20, 21, 22) such that, when the rails (20, 21, 22) are installed on the frame legs (11, ..., 14), those sides of the rails (20, 21, 22) which are directed towards the interior (56) of the switch cabinet (10) are connected flush to the frame legs (11, ..., 14).

2. Switch cabinet according to Claim 1, **characterized in that** the frame legs (11, ..., 14; 15, ..., 18; 25; 30, ..., 33) have a T-shaped cross-sectional profile which is mirror-symmetrical in relation to a centre plane (M).

3. Switch cabinet according to Claim 2, **characterized in that** the width (b4) of the T-shaped cross-sectional profile is three times the width (b2) of the foot (57) of the T-shaped cross-sectional profile, and **in that** the width (b2) of the foot (57) corresponds to the depth of a first DIN rail (21).

4. Switch cabinet according to Claim 2 or 3, **characterized in that** the height (h) of the foot (57) of the T-shaped cross-sectional profile corresponds to the depth of a second DIN rail (20).

5. Switch cabinet according to Claim 4, **characterized in that** the width (b2) of the foot (57) of the T-shaped cross-sectional profile is 15 mm and the height (h) of the foot (57) is 20 mm.

6. Switch cabinet according to one of Claims 2 to 5, **characterized in that** the frame legs (11, ..., 14; 15, ..., 18; 25; 30, ..., 33) are designed as hollow profiles which are formed by bending sheet metal and are closed by welding.

7. Switch cabinet according to Claim 6, **characterized in that** the frame legs (11, ..., 14; 15, ..., 18; 25; 30, ..., 33) have a multiplicity of installation openings (26, ..., 28) arranged at a unit spacing in the longitudinal direction of the legs.

8. Switch cabinet according to Claim 7, **characterized in that** arranged in an alternating manner as installation openings in the two side surfaces of the foot (57) of the T-shaped cross-sectional profile are rectangular cutouts (26) for accommodating cage nuts and round holes (27) into which self-tapping screws can be screwed.

9. Switch cabinet according to Claim 8, **characterized in that** round holes (28, 29) are arranged as installation openings on the underside and in the side surfaces of the crossbar (58) of the T-shaped cross-sectional profile.

10. Switch cabinet according to one of Claims 1 to 9, **characterized in that** in each case one corner component (33) is provided for connecting the frame legs (11, ..., 14; 15, ..., 18; 25; 30, ..., 33) at one of the corner points of the frame (55), the frame legs (30, 31, 32) which meet at the corner points being fastened on said corner component by way of their ends.

11. Switch cabinet according to Claim 10, **characterized in that** the frame legs (11, ..., 14; 15, ..., 18; 25; 30, ..., 33) are designed as hollow profiles with a T-shaped cross-sectional profile, and **in that** the corner component has three legs (34, 35, 36) which project in orthogonal directions in space, have a T-shaped cross-sectional profile and onto which the frame legs (30, 31, 32) can be plugged by way of their ends.

12. Switch cabinet according to Claim 11, **characterized in that** the frame legs (11, ..., 14; 15, ..., 18; 25; 30, ..., 33) are provided with installation openings (26, ..., 29) arranged at a unit spacing in the longitudinal direction of the legs, and **in that** the frame legs (30, 31, 32) are fastened on the corner component (33), once plugged onto the latter, with the aid of these installation openings.

13. Switch cabinet according to one of Claims 10 to 12, **characterized in that** the corner components (33) each have a threaded hole (38) into which an eye bolt can be screwed.

14. Switch cabinet according to one of Claims 1 to 13, **characterized in that** the switch cabinet (10) has a door (19) which is fastened on one of the frame legs (11, ..., 14; 15, ..., 18; 25; 30, ..., 33) such that it can be pivoted by means of hinges (41).

15. Switch cabinet according to Claim 14, **characterized in that** the hinges (41) each comprise a cabinet-side hinge bracket (42), which is fastened on the frame leg (11, ..., 14; 15, ..., 18; 25; 30, ..., 33), and a door-side hinge bracket (47), which is fastened on the door (19), **in that** the two hinge brackets (42, 47) each have at least one scroll (44 or 48, 49, respectively), with a corresponding axial hole (44 or 50, respectively) through which a hinge pin (53) can be inserted, and **in that** provided on the scrolls (44, 48, 49) are means (46, 51) which allow the door (19) to be suspended in a centring manner in the cabinet-side bracket (42), and provisionally fixed, by way of its hinge brackets (47), without use being made of the associated hinge pins (53).

16. Switch cabinet according to Claim 15, **characterized in that** the centring or fixing means comprise corresponding conical centring surfaces (46, 51) at the mutually associated ends of the scrolls (44, 48, 49) of the hinge brackets (42, 47).

17. Frame leg for a switch cabinet according to one of Claims 1 to 16, **characterized in that** the frame leg (11, ..., 14; 15, ..., 18; 25; 30, ..., 33) has a T-shaped cross-sectional profile which is mirror-symmetrical in relation to a centre plane (M), **in that** the width (b4) of the T-shaped cross-sectional profile is three times the width (b2) of the foot (57) of the T-shaped cross-sectional profile, **in that** the width (b2) of the foot (57) corresponds to the depth of a first DIN rail (21), and **in that** the height (h) of the foot (57) of the T-shaped cross-sectional profile corresponds to the depth of a second DIN rail (20).

18. Frame leg according to Claim 17, **characterized in that** the width (b2) of the foot (57) of the T-shaped cross-sectional profile is 15 mm and the height (h) of the foot (57) is 20 mm.

19. Frame leg according to either of Claim 17 and 18, **characterized in that** the frame leg (11, ..., 14; 15, ..., 18; 25; 30, ..., 33) is designed as hollow profiles which are formed by bending sheet metal and are closed by welding, and **in that** the framed leg (11, ..., 14 ; 15, ..., 18; 25; 30, ..., 33) has a multiplicity of installation openings (26, ..., 28) arranged at a unit spacing in the longitudinal direction of the legs, it being the case that arranged in an alternating manner as installation openings in the two side surfaces of the foot (57) of the T-shaped cross-sectional profile are rectangular cutouts (26) for accommodating cage nuts and round holes (27) into which self-tapping screws can be screwed, and that round holes (28, 29) are arranged as installation openings on the underside and in the side surfaces of the crossbar (58) of the T-shaped cross-sectional profile.

20. Hinge for a switch cabinet according to one of Claims 1 to 16, **characterized in that** the hinge (41) respectively comprises a cabinet-side hinge bracket (42) and a door-side hinge bracket (47), **in that** the two hinge brackets (42, 47) each have at least one scroll (44 or 48, 49, respectively), with a corresponding axial hole (44 or 50, respectively) through which a hinge pin (53) can be inserted, and **in that** provided on the scrolls (44, 48, 49) are means (46, 51) which allow the door (19) to be suspended in a centring manner in the cabinet-side bracket (42), and provisionally fixed, by way of its hinge brackets (47), without use being made of the associated hinge pins (53).

21. Hinge according to Claim 20, **characterized in that** the centring or fixing means comprise corresponding conical centring surfaces (46, 51) at the mutually associated ends of the scrolls (44, 48, 49) of the hinge brackets (42, 47).

## Revendications

1. Armoire électrique (10) destinée à recevoir des unités fonctionnelles électriques et/ou électroniques, laquelle armoire électrique (10) comprend un bâti (55) constitué de montants verticaux et horizontaux individuels identiques (11, .., 14 ; 15, .., 18 ; 25 ; 30, .., 33), entourant un espace interne parallélépipédique (56), des rails, notamment des rails DIN (20, 21, 22) destinés à la fixation d'unités fonctionnelles électriques et/ou électroniques (23) pouvant être fixés dans l'espace interne (56) entre les montants verticaux (11, .., 14) appartenant à un côté longitudinal ou à un côté latéral, **caractérisée en ce que** tous les montants (11, .., 14 ; 15, .., 18 ; 25 ; 30, .., 33) présentent un profil en section transversale rectangulaire qui est adapté à la profondeur des rails ou des rails DIN (20, 21, 22) de telle sorte que lors d'un montage des rails (20, 21, 22) sur les montants (11, .., 14), les côtés des rails (20, 21, 22) tournés vers l'espace interne (56) de l'armoire électrique (10) se raccordent en affleurement aux montants (11, .., 14).

2. Armoire électrique selon la revendication 1, **caractérisée en ce que** les montants (11, .., 14 ; 15, .., 18 ; 25 ; 30, .., 33) présentent un profil en section transversale en forme de T, à symétrie spéculaire par rapport à un plan médian (M).

3. Armoire électrique selon la revendication 2, **caractérisée en ce que** la largeur (b4) du profil en section transversale en forme de T vaut le triple de la largeur (b2) de la base (57) du profil en section transversale en forme de T, et **en ce que** la largeur (b2) de la base (57) correspond à la profondeur d'un premier rail DIN (21).

4. Armoire électrique selon la revendication 2 ou 3, **caractérisée en ce que** la hauteur (h) de la base (57) du profil en section transversale en forme de T correspond à la profondeur d'un deuxième rail DIN (20).

5. Armoire électrique selon la revendication 4, **caractérisée en ce que** la largeur (b2) du profil en section transversale en forme de T vaut 15 mm et la hauteur (h) de la base (57) vaut 20 mm.

6. Armoire électrique selon l'une quelconque des revendications 2 à 5, **caractérisée en ce que** les montants (11, .., 14 ; 15, .., 18 ; 25 ; 30, .., 33) sont réalisés en tant que profilés creux en tôle formés par cintrage et fermés par soudage.

7. Armoire électrique selon la revendication 6, **caractérisée en ce que** les montants (11, .., 14 ; 15, .., 18 ; 25 ; 30, .., 33), présentent une pluralité d'ouvertures de montage (26, .., 28) disposées suivant un quadrillage dans la direction longitudinale des montants.

8. Armoire électrique selon la revendication 7, **caractérisée en ce que** dans les deux faces latérales de la base (57) du profil en section transversale en forme de T sont prévues, en tant qu'ouvertures de montage, en alternance, des découpes rectangulaires (26) pour recevoir des écrous encagés et des trous ronds (27) pour visser des vis pour tôles.

9. Armoire électrique selon la revendication 8, **caractérisée en ce que** l'on prévoit sur le côté inférieur et dans les faces latérales de la poutre transversale (58) du profil de section transversale en forme de T des trous ronds (28, 29) servant d'ouvertures de montage.

10. Armoire électrique selon l'une quelconque des revendications 1 à 9, **caractérisée en ce que** pour la connexion des montants en alternance servant d'ouvertures de montage, en alternance servant d'ouvertures de montage, (11, .., 14 ; 15, .., 18 ; 25 ; 30, .., 33) dans l'un des coins du bâti (55), on prévoit à chaque fois une pièce d'angle (33) sur laquelle sont fixés par leurs extrémités les montants (30, 31, 32) se rejoignant au niveau du coin.

11. Armoire électrique selon la revendication 10, **caractérisée en ce que** les montants (11, .., 14 ; 15, .., 18 ; 25 ; 30, .., 33), sont réalisés en tant que profilés creux avec un profil en section transversale en forme de T, et **en ce que** la pièce d'angle présente trois branches (34, 35, 36) partant dans des directions spatiales orthogonales avec un profil en section transversale en forme de T, sur lesquelles les montants (30, 31, 32) peuvent être enfichés avec leurs extrémités.

12. Armoire électrique selon la revendication 11, **caractérisée en ce que** les montants (11, .., 14 ; 15, .., 18 ; 25 ; 30, .., 33), sont munis d'ouvertures de montage (26, .., 29) disposées suivant un quadrillage dans la direction longitudinale des montants et **en ce que** les montants (30, 31, 32) sont fixés après l'enfichage sur la pièce d'angle (33) par l'intermédiaire de ces ouvertures de montage.

13. Armoire électrique selon l'une quelconque des revendications 10 à 12, **caractérisée en ce que** les pièces d'angle (33) présentent chacune un trou fileté (38) pour le vissage d'une vis à boucle.

14. Armoire électrique selon l'une quelconque des revendications 1 à 13, **caractérisée en ce que** l'armoire électrique (10) présente une porte (19) qui est fixée de manière à pouvoir pivoter au moyen de charnières (41) sur l'un des montants (11, .., 14 ; 15, .., 18 ; 25 ; 30, .., 33).

15. Armoire électrique' selon la revendication 14, **caractérisée en ce que** les charnières (41) comprennent à chaque fois une bride de charnière (42) du côté de l'armoire, fixé au montant (11, .., 14 ; 15, .., 18 ; 25 ; 30, .., 33) et une bride de charnière (47) du côté de la porte fixé à la porte (19), **en ce que** les deux brides de charnière (42, 47) présentent à chaque fois au moins un rouleau (44, respectivement 48, 49) avec un trou axial correspondant (45, respectivement 50) pour permettre le passage d'un axe de charnière (53), et **en ce que** des moyens (46, 51) sont prévus sur les rouleaux (44, 48, 49) par l'intermédiaire desquels la porte (19) peut être accrochée de manière centrée et fixée provisoirement avec ses brides de charnière (47) sans insérer l'axe de charnière associé (53) dans la bride de charnière (42) du côté de l'armoire.

16. Armoire électrique selon la revendication 15, **caractérisée en ce que** les moyens de centrage et de fixation comprennent des faces de centrage (46, 51) coniques correspondantes aux extrémités associées mutuellement des rouleaux (44, 48, 49) des brides de charnière (47, 48, 49).

17. Montant pour une armoire électrique selon l'une quelconque des revendications 1 à 16, **caractérisé en ce que** le montant (11, .., 14 ; 15, .., 18 ; 25 ; 30, .., 33) présente un profil transversal en forme de T à symétrie spéculaire par rapport à un plan médian (M), **en ce que** la largeur (b4) du profil en section transversale en forme de T vaut le triple de la largeur (b2) de la base (57) du profil en section transversale en forme de T, **en ce que** la largeur (b2) de la base (57) correspond à la profondeur d'un premier rail DIN (21), et **en ce que** la hauteur (h) de la base (57) du profil en section transversale en forme de T correspond à la profondeur d'un deuxième rail DIN (20).

18. Montant selon la revendication 17, **caractérisé en ce que** la largeur (b2) du profil en section transversale en forme de T vaut 15 mm et la hauteur (h) de la base (57) vaut 20 mm.

19. Montant selon l'une quelconque des revendications 17 et 18, **caractérisé en ce que** le montant (11, .., 14 ; 15, .., 18 ; 25 ; 30, .., 33) est réalisé en tant que profilé creux en tôle formé par cintrage et fermé par soudage et **en ce que** le montant (11, .., 14 ; 15, .., 18 ; 25 ; 30, .., 33) présente une pluralité d'ouvertures de montage (26, .., 28) disposées suivant un quadrillage dans la direction longitudinale des montants, dans les deux faces latérales de la base (57) du profil en section transversale en forme de T étant prévues, en tant qu'ouvertures de montage, en alternance, des découpes rectangulaires (26) pour recevoir des écrous encagés et des trous ronds (27) pour visser des vis pour tôles et des trous ronds (28, 29) servant d'ouvertures de montage étant disposés sur le côté inférieur et dans les faces latérales de la poutre transversale (58) du profil de section transversale en forme de T.

20. Charnière pour une armoire électrique selon l'une quelconque des revendications 1 à 16, **caractérisée en ce que** la charnière (41) comprend à chaque fois une bride de charnière (42) du côté de l'armoire et une bride de charnière (47) du côté de la porte, **en ce que** les deux brides de charnière (42, 47) présentent à chaque fois au moins un rouleau (44, respectivement 48, 49) avec un trou axial correspondant (45, respectivement 50) pour permettre le passage d'un axe de charnière (53), et **en ce que** des moyens (46, 51) sont prévus sur les rouleaux (44, 48, 49) par l'intermédiaire desquels la porte (19) peut être accrochée de manière centrée et fixée provisoirement avec ses brides de charnière (47) sans insérer l'axe de charnière associé (53) dans la bride de charnière (42) du côté de l'armoire.

21. Charnière selon la revendication 20, **caractérisée en ce que** les moyens de centrage et de fixation comprennent des faces de centrage (46, 51) coniques correspondantes aux extrémités associées mutuellement des rouleaux (44, 48, 49) des brides de charnière (47, 48, 49).
